# EUROPÄISCHE PATENTSCHRIFT

(11) **EP 2 167 250 B1**
(45) Veröffentlichungstag und Bekanntmachung des Hinweises auf die Patenterteilung: **15.06.2011**
(21) Anmeldenummer: 07801414.9
(22) Anmeldetag: 29.06.2007
(51) Int. Cl.: B21C 37/16, B21D 41/00, B21K 1/10

(54) **VORRICHTUNG UND VERFAHREN ZUM AXIALUMFORMEN VON LANGGESTRECKTEN HOHLKÖRPERN**
DEVICE AND METHOD FOR THE AXIAL FORMING OF ELONGATED HOLLOW BODIES
DISPOSITIF ET PROCÉDÉ DE FAÇONNAGE AXIAL DE CORPS CREUX ALLONGÉS

(43) Veröffentlichungstag der Anmeldung: 31.03.2010
(73) Patentinhaber: GKN Driveline International GmbH, 53797 Lohmar (DE)
(72) Erfinder: BROCHHEUSER, Ulrich, 53819 Neunkirchen (DE); GEHRKE, Andreas, 53721 Siegburg (DE)
(74) Vertreter: Rössler, Matthias
(86) Internationale Anmeldenummer: PCT/EP2007/005799
(87) Internationale Veröffentlichungsnummer: WO 2009/003498

(56) Entgegenhaltungen:
- EP-A- 0 106 751
- WO-A-2006/135266
- DE-A1- 19 523 280
- GB-A- 2 171 350
- US-A- 3 893 321

## Beschreibung

Die vorliegende Erfindung betrifft eine Vorrichtung gemäß dem Oberbegriff des Patentanspruchs 1 und ein Verfahren gemäß dem Oberbegriff des Patentanspruchs 3 zum Axialumformen eines langgestreckten Hohlkörpers. Eine solche Vorrichtung bzw. ein solches Verfahren sind aus der WO-A-2006/135266 bekannt.

Aus der US 3,893,321 ist eine Verfahren bekannt, bei dem ein Werkstück mittels eines Stempels durch segmentierte Hämmerbacken hindurchgedrückt wird, die den Durchmesser des Werkstückes reduzieren und so in mehreren hintereinander angeordneten Abschnitten das Werkstück an die Form eines innerhalb des Werkstückes angeordneten Doms anpassen. Dort erfolgt also ausschließlich eine Reduzierung des Durchmessers.

Die DE 195 23 280 A1 ist auf eine Vorrichtung mit einem Schmiedewerkzeug gerichtet, wobei hier ein Werkstück mittels eines Stempels und eines Doms durch das Werkzeug hindurchgeführt wird. Durch das Schmiedewerkzeug wird der Durchmesser des Werkstückes an den Durchmesser des Dorns angepasst. Das bedeutet aber, dass hier ausschließlich eine Reduzierung des Durchmessers des Werkstückes erfolgt.

Die EP 0 106 751 A1 zeigt eine Vorrichtung bzw. ein Verfahren, wobei ein Werkstück durch eine Matrize hindurchgedrückt wird mittels eines Doms. Dieser Dorn weist unterschiedliche Abschnitte auf, so dass das Werkstück in einem ersten Abschnitt in seinem Innen- und Außendurchmesser reduziert wird und in einem zweiten Abschnitt mit seinem Innendurchmesser an den Dorn angepasst wird und mit seinem Außendurchmesser durch die Matrize reduziert wird. Dort erfolgt eine Materialverdrängung in Achsrichtung. Eine Aufweitung des Werkstückes durch den Stempel erfolgt jedoch nicht.

In der WO 2006/135266 A1 ist ein Verfahren offenbart, bei dem ein Rohr durch eine Vorrichtung einerseits aufgeweitet und andererseits in seinem Durchmesser reduziert wird. Für diesen Vorgang wird aber das Rohr gedreht, wobei der Aufweitdorn und der Stempel eine nicht gleich gerichtete Bewegung ausführen. Für das Reduzieren und das Aufweiten des Durchmessers sind jedoch verschiedene Werkzeuge erforderlich, die nicht gleichzeitig in der Vorrichtung angeordnet sind. Aus dem allgemein bekannten Stand der Technik geht hervor, dass Rohre an ihren Enden in einem Arbeitsgang entweder in ihrem Durchmesser aufgeweitet oder auch reduziert werden können. Dabei werden Rohre bzw. langgestreckte Hohlkörper jedoch in zwei getrennt voneinander ablaufenden Arbeitsgängen umgeformt, die entweder auf verschiedenen Maschinen stattfinden oder einen Rüstvorgang erfordern, damit die jeweils nötigen Werkzeugsätzen eingesetzt werden können.

Vor diesem Hintergrund ist es daher Aufgabe der Erfindung, die mit Bezug auf den Stand der Technik geschilderten Probleme zumindest teilweise zu lösen und insbesondere eine Vorrichtung bzw. ein Verfahren zum Axialumformen eines langgestreckten Hohlkörpers bereitzustellen, um Werkstücke mit den Verfahren Aufweiten und Reduzieren in einem Arbeitsgang herzustellen, so dass ein zweiter Satz Werkzeuge, Arbeitszeit, Rüstzeit und auch Maschinenzeit eingespart werden können.

Diese Aufgaben werden gelöst mit einer Vorrichtung gemäß den Merkmalen des Patentanspruchs 1 und durch ein Verfahren gemäß den Merkmalen des Patentanspruchs 3. Weitere vorteilhafte Ausgestaltungen der Erfindung sowie eine bevorzugte Verwendung der Erfindung sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Schutzansprüchen angegebenen Merkmale in der Beschreibung näher präzisiert und erläutert, wobei weitere bevorzugte Ausführungsbeispiele der Erfindung dargestellt werden.

Vorgeschlagen wird eine Vorrichtung zum Axialumformen eines langgestreckten Hohlkörpers, aufweisend zumindest
- eine Reduziermatrize zum Hindurchführen des langgestreckten Hohlkörpers (2),
- ein Stempel zum Drücken des langgestreckten Hohlkörpers durch die Reduziermatrize in Richtung einer Achse,
- ein Aufweitdorn und
- Mittel zum Begrenzen der axialen Verschiebung des Stempels,
wobei der Stempel und der Aufweitdorn auf derselben Achse bewegbar sind und der Aufweitdorn innerhalb des Stempels angeordnet ist. Die Vorrichtung ist zum Aufweiten eines Ausgangsdurchmessers des Hohlkörpers mittels des Aufweitdorns geeignet.

Die erfindungsgemäße Vorrichtung ist dabei zur Fertigung von langgestreckten Hohlkörpern geeignet, insbesondere von Rohren, wobei diese Werkstücke auch Strukturen aufweisen können, die bereits vorhanden sind oder durch das Durchdrücken durch die Reduziermatrize und/oder das Aufweiten mittels des Aufweitdorns hergestellt werden können. Insbesondere kann so der Hohlkörper in Folge einer gleichgerichteten Bewegung des Stempels und des Aufweitdorns in einem ersten Abschnitt zu einem ersten Durchmesser reduziert und in einem zweiten Abschnitt zu einem zweiten Durchmesser aufgeweitet werden.

Bevorzugt ist der Stempel hierbei ebenfalls nach Art eines Zylinders oder eines ähnlichen Hohlkörpers ausgebildet und weist eine zentrale Achse auf, die regelmäßig mit der Verfahrachse übereinstimmt. Koaxial und/oder parallel zu dieser Achse ist nunmehr (wenigstens) ein so genannter Aufweitdorn vorgesehen, der sich in einen entsprechenden Hohlraum des Stempels erstreckt. Bevorzugt sind Stempel und Aufweitdorn koaxial zueinander ausgebildet. Vorteilhafter Weise ragt der Aufweitdorn aus dem Stempel im "eingefahrenen" Zustand hinaus, so dass dieser eine vorgelagerte, Radialabstützung für den langgestreckten Hohlkörper im ersten Umformprozess bildet. Für die Relativbewegung von Stempel und Aufweitdorn können separate oder gemeinsame Antriebseinheiten vorgesehen sein, die mittels einer Steuerung (ggf. unter Einsatz von Sensoren) betrieben werden. Die Mittel zum Begrenzen der axialen Verschiebung des Stempels können auf unterschiedliche konstruktive oder steuerungstechnische Konzepte zurückgreifen, so dass z.B. ein Motor, ein Anschlag, einen Vorschubbegrenzer, eine Bremse, eine Rastnase, ein Dämpfer oder ähnliches vorgesehen werden kann, damit der Stempel zu einem vorgegebenen Zeitpunkt (und/) oder Verfahrweg anhält bzw. gestoppt wird.

Zur Erreichung von höheren Umformgraden kann sowohl die Aufnahme für das Werkstück als auch die Reduziermatrize beheizbar ausgeführt sein, so dass das Werkstück grundsätzlich (und bevorzugt) kalt, aber ggf. auch halbwarm oder warm umgeformt werden kann. Bei einer halbwarmen Umformung sollte zumindest der Bereich der Blauversprödung (ca. 400 °C) überwinden sein, wobei bevorzugt im Bereich oberhalb von 700 - 800°C gearbeitet werden kann. Eine warme Umformung wird ab Temperaturen von zumindest 1.100 °C durchgeführt. Deshalb wird insbesondere auch vorgeschlagen, dass der Aufweitdorn und/oder der Stempel und/oder die Reduziermatrize und/oder eine Aufnahme für das langgestreckte Hohlprofil beheizbar ausgeführt sind.

Gemäß einer Weiterbildung der Vorrichtung wird vorgeschlagen, dass der Aufweitdorn unabhängig vom Stempel bewegbar ist. Somit lässt sich das Werkstück in beliebig lange erste und zweite Abschnitte unterteilen. Dabei drückt der Stempel den Hohlkörper soweit durch die Reduzieimatrize, bis eine vorbestimmte Länge eines ersten Abschnitts erreicht ist. Gleichzeitig oder auch nach Abschluss der Bewegung des Stempels wird der Aufweitdorn weiter verfahren, so dass ausgehend von dem Ende des Werkstücks, welches mit dem Stempel bzw. dem Aufweitdorn in Verbindung steht, das Werkstück über die vorbestimmte Länge eines zweiten Abschnitts aufgeweitet wird. Dabei muss der Aufweitdorn nicht zwingend so weit gedrückt werden, dass das Werkstück den Spalt zwischen Aufweitdorn und Reduziermatrize ausfüllt, sondern kann bereits vorher gestoppt werden. Dadurch würde ein Zwischenabschnitt zwischen dem ersten und dem zweiten Abschnitt entstehen, der im Wesentlichen der Form des ursprünglichen Werkstücks entspricht. Durch ein Ausfüllen des Spalts zwischen Aufweitdorn und Reduziermatrize kann jedoch der Übergang zwischen dem ersten und dem zweiten Abschnitt insoweit kalibriert werden, dass das Werkstück gegebenenfalls in vorgesehene Wandstrukturierungen eingepresst und somit weiter umgeformt werden kann.

Die eingangs gestellte Aufgabe wird weiterhin durch ein Verfahren gelöst zum Axialumformen eines langgestreckten Hohlkörpers, wobei der Hohlkörper durch eine gleichgerichtete Bewegung eines Stempels und eines Aufweitdorns während eines ersten Prozesses zu einem ersten Durchmesser in einem ersten Abschnitt reduziert und während eines zweiten Prozesses in einem zweiten Abschnitt zu einem zweiten Durchmesser aufgeweitet wird.

Gemäß einer Weiterbildung des Verfahrens erfolgt also während des ersten Prozesses eine parallele Bewegung eines Stempels und eines Aufweitdorns innerhalb einer Aufnahme zur Positionierung des langgestreckten Hohlkörpers, wobei der Stempel den langgestreckten Hohlkörper in eine Reduziermatrize drückt. So wird hier beispielsweise im ersten Prozess der Stempel in Richtung der Achse longitudinal hin zur Reduziermatrize verfahren, wobei der Aufweitdorn den Stempel bzw. den umzuformenden Hohlkörper in der gewünschten Stellung fixieren kann. Dabei wird das Werkstück (Hohlkörper) mit der erforderlichen Kraft (teilweise) durch die Reduziermatrize gedrückt, wobei gleichzeitig im Kontaktbereich von Reduziermatrize und Werkstück eine Reduzierung des vorherigen (Ausgangs-) Durchmesser des Werkstücks erfolgt.

Besonders vorteilhaft ist es, dass die Prozesse des Aufweitens und des Reduzierens der Durchmesser des Hohlkörpers nacheinander durchgeführt werden. Ist die gewünschte Reduzierung über den ersten Abschnitt demnach erreicht, endet der erste Prozess und der zweite beginnt bevorzugt unmittelbar im Anschluss, so dass eine ununterbrochene Umformung stattfindet.

Außerdem wird auch als vorteilhaft erachtet, dass während des zweiten Prozesses nur eine axiale Verschiebung des Aufweitdornes vorgenommen wird, bis sich der Aufweitdorn zumindest teilweise in eine Reduziermatrize hinein erstreckt. Während der Stempel nun also nicht weiter bewegt wird und in der Aufnahme ruht, wird der Aufweitdorn (ggf. auch Profildom) allein in Richtung der Reduziermatrize longitudinal weiter bewegt. Dabei dringt der Aufweitdorn in das Werkstück ein und weitet es soweit auf, dass dessen Umfangsfläche an der Aufnahme zur Anlage kommt.

Insbesondere wirken folglich der Stempel axial und der Aufweitdorn radial von Innen auf den langgestreckten Hohlkörper ein. Dies erfolgt bevorzugt in zwei getrennten Prozessen zeitlich nacheinander, allerdings können hier gleichwohl die Prozesse Reduzieren (erster Prozess) und Aufweiten (zweiter Prozess) kombiniert werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf die sie jedoch nicht beschränkt ist. In der Zeichnung zeigt schematisch:
- Fig. 1:: einen Querschnitt durch eine Ausführungsvariante der Vorrichtung,
- Fig. 2:: einen Querschnitt durch die Vorrichtung aus Fig. 1 während des Reduzie- rens eines Durchmessers des Werkstücks,
- Fig. 3:: einen Querschnitt durch die Vorrichtung aus Fig. 1 während des anschlie- ßenden Aufweitens des Durchmessers, und
- Fig. 4:: prinzipiell einen Antriebsstrang eines Kraftfahrzeuges mit einer Längswel- le.

Die vorliegende Erfindung ist nicht auf die dargestellten Ausführungsbeispiele beschränkt. Es sind vielmehr zahlreiche Abwandlungen der Erfindung im Rahmen der Patentansprüche möglich. So können insbesondere auch nicht rotationssymmetrische Aufnahmen, Reduziermatrizen, Stempel oder Aufweitdorne verwendet werden zur Herstellung von ebenfalls nicht rotationssymmetrischen Werkstücken. Weiterhin können die Werkstücke profiliert sein bzw. infolge einer profilierten Reduziermatize bzw. eines profilierten Aufweitdorns und einer entsprechend angepassten Aufnahmeform bearbeitet werden.

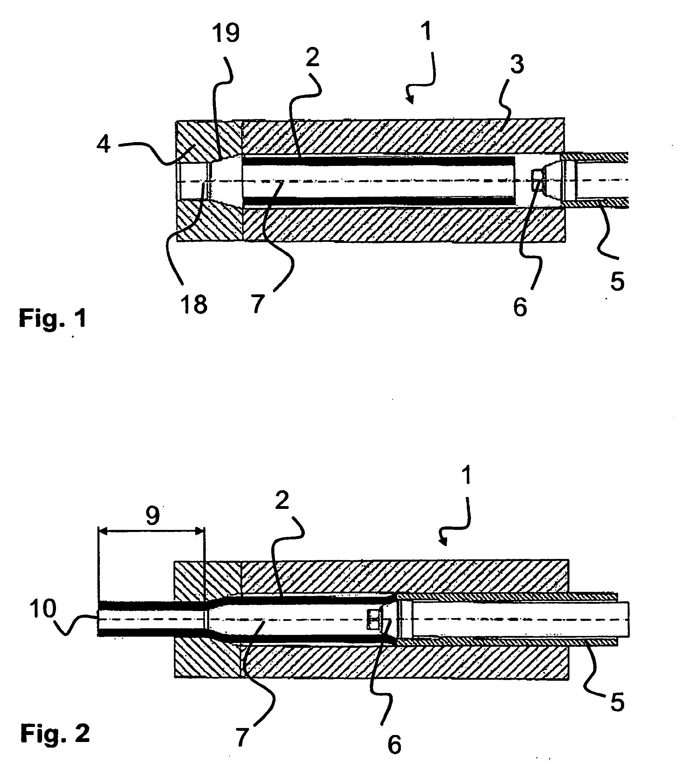

Fig. 1 zeigt schematisch den Querschnitt einer Vorrichtung 1 zum Axialumformen eines langgestreckten Hohlkörpers 2, wobei der Hohlkörper 2 zu Beginn des Prozesses in die Aufnahme 3 eingelegt oder eingeführt wird. Dabei sind Stempel 5 und Aufweitdorn 6 nicht mit dem Hohlkörper 2 im Eingriff, können aber bereits in der Aufnahme 3 positioniert bzw. geführt sein. Der Aufweitdorn 6 wird dabei innerhalb des Stempels 5 geführt und ist insbesondere unabhängig von dem Stempel 5 auf derselben Achse 7 bewegbar.

Die Vorrichtung 1 weist weiterhin eine Reduziermatrize 4 auf, die an einem Ende der Vorrichtung 1 gegenüber der Eingreiföffnung des Stempels 5 und des Aufweitdorns 6 angeordnet ist. Die Reduziermatrize 4 weist insbesondere eine Öffnung 18 mit einem sich verengenden bzw. reduzierenden Querschnitt (z.B. nach Art eines Konus 19 oder einer Fase) auf, wobei das Werkstück (zumindest in dem umzuformenden Bereich) mit einem Ausgangsdurchmesser bereitgestellt wird, der größer als der kleinste Querschnitt der Reduziermatrize.

Die Vorrichtung 1 kann zur Erreichung höherer Umformgrade des Werkstückes beheizt bzw. erwärmbar ausgeführt sein, um eine Umformung bei höheren Temperaturen zu ermöglichen. Dabei können Komponenten der Vorrichtung 1 z.B. durch Induktion, Durchströmung der Vorrichtung 1 mit einem Heizmedium, elektrische Heizelemente usw. auf entsprechende Temperaturen gebracht werden. Weiterhin kann der Hohlkörper 2 bereits vorgewärmt in die Aufnahme 3 eingelegt werden. Zusätzlich kann auch wenigstens ein Element der Gruppe Aufnahme 3, Reduziermatrize 4, Stempel 5 und Aufweitdorn 6 beheizt bzw. erwärmt werden.

Fig. 2 zeigt schematisch den Querschnitt durch die Vorrichtung 1, wobei der Stempel 5 sich im Eingriff mit dem Hohlkörper 2 befindet und diesen gegen die Reduziermatrize 4 drückt, so dass in dem ersten Abschnitt 9 der Ausgangsdurchmesser des Hohlkörpers 2 zu einem ersten Durchmesser 10 reduziert wird. Stempel 5 und Aufweitdorn 6 werden in diesem ersten Prozess gemeinsam bewegt und drücken den Hohlkörper 2 gemeinsam durch die Reduziermatrize 4.

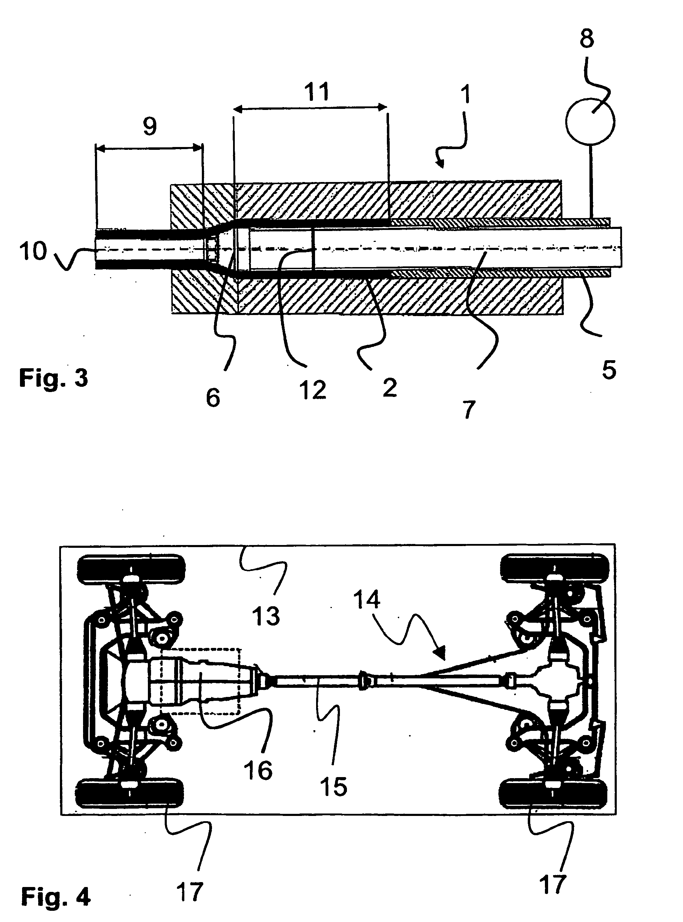

Fig. 3 zeigt schematisch den Querschnitt der Vorrichtung 1 zum Axialumformen des langgestreckten Hohlkörpers 2, wobei der Aufweitdorn 6 nunmehr unabhängig vom Stempel 5 bewegt wird und das Werkstück 2 in einem zweiten Abschnitt 11 des langgestreckten Hohlkörpers 2 zu einem zweiten Durchmesser 12 aufweitet, der größer als der Ausgangsdurchmesser des Werkstücks ist. Der Stempel 5 wird dabei in seiner axialen Verschiebung durch einen hier nur schematisch gezeigten Vorschubbegrenzer 8 (z.B. einem entsprechend gesteuerten Motor) gestoppt. Insbesondere wird der Aufweitdorn 6 bis zum Anschlag mit der Reduziermatrize 4 bewegt, so dass ein kalibrierter Übergang zwischen dem ersten Durchmesser 10 und dem zweiten Durchmesser 12 des Hohlkörpers 2 erreicht wird.

Zur Entnahme des Werkstücks 2 können einerseits die Aufnahme 3 und die Reduziermatrize 4 geöffnet werden, andererseits kann die Reduziermatrize 4 gegenüber der Aufnahme 3 gelöst werden, so dass der fertig hergestellte Hohlkörper 2 entlang der Achse 7 aus der Aufnahme 3 herausgenommen werden kann. Gleichzeitig kann der Stempel 5 bzw. der Aufweitdorn 6 als Auswerfer genutzt werden. Insbesondere kann aber auch Stempel 5 und Aufweitdorn 6 in die Ausgangslage zurückgefahren werden und das Werkstück wird entweder durch die geöffnete Reduziermatrize 4 entnommen oder durch die geöffnete Aufnahme 3.

Fig. 4. veranschaulicht nun noch ein besonders bevorzugtes Einsatzgebiet der so hergestellten Hohlprofile 2 in einem Kraftfahrzeug 13. Dabei kommen die Hohlprofile im Antriebsstrang 14 eines Kraftfahrzeuges 13 beispielsweise als so genannte Längswellen 15 zum Einsatz, um ein vom Antrieb generiertes Drehmoment auf entfernte Räder 17 zu übertragen.

### Bezugszeichenliste

- 1: Vorrichtung
- 2: Hohlkörper
- 3: Aufnahme
- 4: Reduziermatrize
- 5: Stempel
- 6: Aufweitdorn
- 7: Achse
- 8: Vorschubbegrenzer
- 9: erster Abschnitt
- 10: erster Durchmesser
- 11: zweiter Abschnitt
- 12: zweiter Durchmesser
- 13: Kraftfahrzeug
- 14: Antriebsstrang
- 15: Längswelle
- 16: Antrieb
- 17: Rad
- 18: Öffnung
- 19: Konus

## Patentansprüche

1. Vorrichtung (1) zum Axialumformen eines langgestreckten Hohlkörpers (2), aufweisend zumindest
- eine Reduziennatrize (4) zum Hindurchführen des langgestreckten Hohlkörpers (2) und
- einen Aufweitdorn (6) **dadurch gekennzeichnet, daß** die Vorrichtung auch zumindest
- einen Stempel (5) zum Drücken des langgestreckten Hohlkörpers (2) durch die Reduziermatrize (4) in Richtung einer Achse (7) und
- Mittel zum Begrenzen der axialen Verschiebung des Stempels (5) aufweist,
wobei der Stempel (5) und der Aufweitdorn (6) auf derselben Achse (7) bewegbar sind und der Aufweitdorn (6) innerhalb des Stempels (5) angeordnet ist und wobei die Vorrichtung (1) zum Aufweiten eines Ausgangsdurchmessers des Hohlkörpers (2) mittels des Aufweitdorns (6) geeignet ist.

2. Vorrichtung (1) nach Patentanspruch 1, wobei der Aufweitdorn (6) unabhängig vom Stempel (5) bewegbar ist.

3. Verfahren zum Axialumformen eines langgestreckten Hohlkörpers (2), wobei der Hohlkörper (2) während eines ersten Prozesses zu einem ersten Durchmesser (10) in einem ersten Abschnitt (9) reduziert und während eines zweiten Prozesses in einem zweiten Abschnitt (11) zu einem zweiten Durchmesser (12) aufgeweitet wird, **dadurch gekennzeichnet, daß** das Reduzieren und das Aufweiten des Hohlkörpers (2) durch eine gleichgerichtete Bewegung eines Stempels (5) und eines Aufweitdorns (6) erfolgen.

4. Verfahren nach Patentanspruch 3, bei dem während des ersten Prozesses eine parallele Bewegung eines Stempels (5) und eines Aufweitdorns (6) innerhalb einer Aufnahme (3) zur Positionierung des langgestreckten Hohlkörpers (2) erfolgt, wobei der Stempel (5) den langgestreckten Hohlkörper (2) in eine Reduziermatrize (4) drückt.

5. Verfahren nach Patentanspruch 3 oder 4, bei dem die Prozesse des Aufweitens und des Reduzierens der Durchmesser (10, 12) des Hohlkörpers (2) unmittelbar nacheinander durchgeführt werden.

6. Verfahren nach einem der Patentansprüche 3 bis 5, bei dem während des zweiten Prozesses eine nur eine axiale Verschiebung des Aufweitdornes (6) vorgenommen wird, bis sich der Aufweitdorn (6) zumindest teilweise in eine Reduziermatrize (4) hinein erstreckt.

7. Verfahren nach einem der Patentansprüche 3 bis 6, bei dem der Stempel (5) axial und der Aufweitdorn (6) radial von Innen auf den langgestreckten Hohlkörper (2) einwirkt.

## Claims

1. A device (1) for the axial forming of an elongate hollow body (2), having at least
- a reduction die (4) for leading through the elongate hollow body (2), and
- an expansion mandrel (6),
**characterized in that** the device (1) further comprises at least
- a ram (5) for pushing the elongate hollow body (2) through the reduction die (4) in the direction of an axis (7), and
- means for limiting the axial movement of the ram (5),
wherein the ram (5) and the expansion mandrel (6) are movable on the same axis (7) and the expansion mandrel (6) is arranged within the ram (5) and wherein the device (1) is suitable for expanding a starting diameter of the hollow body (2) by means of the expansion mandrel (6).

2. The device (1) as claimed in claim 1, wherein the expansion mandrel (6) is movable independently of the ram (5).

3. A method for the axial forming of an elongate hollow body (2), wherein the hollow body (2) is reduced to a first diameter (10) in a first portion (9) during a first process and is expanded in a second portion (11) to a second diameter (12) during a second process, **characterized in that** the reduction and the expansion of the hollow body (2) is conducted by means of a movement of a ram (5) and an expansion mandrel (6) in the same direction.

4. The method as claimed in claim 3, in which method, during the first process, a parallel movement of a ram (5) and of an expansion mandrel (6) takes place within a receptacle (3) for positioning the elongate hollow body (2), wherein the ram (5) pushes the elongate hollow body (2) into a reduction die (4).

5. The method as claimed in claim 3 or 4, in which method the processes of the expansion and of the reduction of the diameters (10, 12) of the hollow body (2) are carried out in direct succession.

6. The method as claimed in one of claims 3 to 5, in which method, during the second process, only an axial movement of the expansion mandrel (6) is carried out until the expansion mandrel (6) extends at least partially into a reduction die (4).

7. The method as claimed in one of claims 3 to 6, in which method the ram (5) acts on the elongate hollow body (2) axially and the expansion mandrel (6) acts on the elongate hollow body (2) radially from the inside.

## Revendications

1. Dispositif (1) destiné au façonnage axial d'un corps creux allongé (2), comportant au moins
- une matrice de réduction (4) pour passer à travers le corps creux allongé (2) et
- un mandrin d'élargissement (6),
**caractérisé en ce que** le dispositif a au moins aussi
- un piston (5) pour presser le corps creux allongé (2) par la matrice de réduction (4) en direction d'un axe (7) et
- des moyens pour limiter le déplacement axial du piston (5),
le piston (5) et le mandrin d'élargissement (6) étant déplaçables sur le même axe (7) et le mandrin d'élargissement (6) étant agencé à l'intérieur du piston (5) et le dispositif (1) étant approprié à élargir un diamètre de sortie du corps creux (2) au moyen du mandrin d'élargissement (6).

2. Dispositif (1) selon la revendication 1, le mandrin d'élargissement (6) pouvant être déplacé indépendamment du piston (5).

3. Procédé destiné au façonnage axial d'un corps creux allongé (2), dans le cas duquel durant un premier processus le corps creux (2) étant réduit en un premier diamètre (10) dans un premier tronçon (9) et durant un deuxième processus dans un deuxième tronçon (11) étant élargi en un deuxième diamètre (12), **caractérisé en ce que** la réduction et l'élargissement du corps creux (2) sont effectués grâce à un mouvement de même direction d'un piston (5) et d'un mandrin d'élargissement (6).

4. Procédé selon la revendication 3, dans le cas duquel durant le premier processus un mouvement parallèle d'un piston (5) et d'un mandrin d'élargissement (6) est effectué à l'intérieur d'un logement (3) pour le positionnement du corps creux allongé (2), le piston (5) pressant le corps creux allongé (2) dans une matrice de réduction (4).

5. Procédé selon la revendication 3 ou 4, dans le cas duquel les processus d'élargissement et de réduction des diamètres (10, 12) du corps creux (2) sont exécutés immédiatement l'un après l'autre.

6. Procédé selon l'une des revendications 3 à 5, dans le cas duquel durant le deuxième processus seulement un déplacement axial du mandrin d'élargissement (6) est effectué, jusqu'à ce que le mandrin d'élargissement (6) s'étende au moins partiellement dans une matrice de réduction (4).

7. Procédé selon l'une des revendications 3 à 6, dans le cas duquel le piston (5) agit axialement et le mandrin d'élargissement (6) radialement de l'intérieur sur le corps creux allongé (2).
